# EUROPÄISCHE PATENTSCHRIFT

(11) **EP 2 834 484 B1**
(45) Veröffentlichungstag und Bekanntmachung des Hinweises auf die Patenterteilung: **25.05.2016**
(21) Anmeldenummer: 13700890.0
(22) Anmeldetag: 17.01.2013
(51) Int. Cl.: F01L 13/00, F01L 1/08, F02D 13/02

(54) **MECHANISCH STEUERBARER VENTILTRIEB MIT EINEM GASAUSLASSVENTIL SOWIE MECHANISCH STEUERBARE VENTILTRIEBANORDNUNG UND BRENNKRAFTMASCHINE**
MECHANICALLY ACTUATED EXHAUST VALVE DRIVE ARRANGEMENT, AND ENGINE INCLUDING THE SAME
DISPOSITIF DE COMMANDE MECANIQUE DE SOUPAPE D'ECHAPPEMENT EN MOTEUR COMPRENANT UN TEL DISPOSITIF

(30) Priorität: 05.04.2012 DE 102012006982
(43) Veröffentlichungstag der Anmeldung: 11.02.2015
(73) Patentinhaber: Kolbenschmidt Pierburg Innovations GmbH, 74172 Neckarsulm (DE)
(72) Erfinder: NOWAK, Martin, 51379 Leverkusen (DE); GRIMM, Karsten, 52064 Aachen (DE); BREUER, Michael, 52152 Simmerath (DE); DISMON, Heinrich, 52538 Gangelt (DE)
(74) Vertreter: Patentanwälte ter Smitten Eberlein Rütten Partnerschaftsgesellschaft
(86) Internationale Anmeldenummer: PCT/EP2013/050803
(87) Internationale Veröffentlichungsnummer: WO 2013/149736

(56) Entgegenhaltungen:
- EP-A1- 2 146 076
- WO-A1-2004/025109
- DE-A1-102006 033 559

## Beschreibung

Die Erfindung betrifft einen mechanisch steuerbaren Ventiltrieb mit einem Gasauslassventil, wobei dem Gasauslassventil eine Übertragungsanordnung zugeordnet ist, wobei die Übertragungsanordnung mindestens eine Zwischenhebelanordnung und mindestens eine Schwenkhebelanordnung aufweist, wobei ein Zwischenhebel der Zwischenhebelanordnung eine Arbeitskurve zur Wirkverbindung mit einem Schwenkhebel der Schwenkhebelanordnung aufweist, wobei der Zwischenhebel in Wirkverbindung mit einer Umfangskontur einer Nockenwelle steht und wobei die Zwischenhebelanordnung ein Angriffsorgan aufweist, das mit einer Ventilhubverstelleinrichtung in Wirkverbindung steht, derart, dass verschiedene Ventilhubpositionen einstellbar sind, wobei Federmittel vorgesehen sind, die auf die Zwischenhebelanordnung angreifen.

Des Weiteren betrifft die Erfindung eine Ventiltriebanordnung und eine Brennkraftmaschine mit einem derartigen Ventiltrieb.

Derartige, mechanisch steuerbare Ventiltriebe sind hinlänglich bekannt. So beschreiben die EP 1 618 293 B1 und die DE 10 2006 033 559 A1 Ventiltriebe, die eine einstellbare Hubhöhe eines betreffenden Gaswechselventils bewirken. Das Gaswechselventil kann hierbei sowohl als Einlass- als auch als Auslassventil ausgeführt sein. So ist insbesondere beim Ottomotor mit derartigen Ventiltriebanordnungen eine interne Abgasrückführung ohne weiteres möglich, da es aufgrund der saugseitigen Drosselung eine hohe treibende Druckdifferenz zwischen Abgasseite und Zylindersaugseite gibt und dementsprechend ein ausreichender Ventilfreigang im oberen Totpunkt dargestellt werden kann. Diese beiden Voraussetzungen, Druckdifferenz und Ventilfreigang, sind beim Dieselmotor nicht gegeben, so dass hier eine einfache Übertragung dieser am Ottomotor bewährten Technik nicht möglich ist. Jedoch ist gerade beim Dieselmotor eine Abgasrückführung zur Begrenzung der NOₓ-Emissionen zwingend notwendig. Ventiltriebe, die verschiedene Ventilhubpositionen ermöglichen, sind darüber hinaus aus der WO 2004/025109 A1 und der EP 2 146 076 A1 bekannt.

Eine bekannte Lösung zu diesem Problem ist aus der DE 10 2007 049 109 A1 bekannt. Diese Druckschrift schlägt vor, dass wenigstens ein Nocken einer Nockenwelle derart ausgebildet ist, dass der Verlauf eines Haupthubes über den Kurbelwinkel des diesen Nocken zugeordneten Gasauslassventils wahlweise oder dauerhaft in seiner Amplitude und/oder zeitlichen Länge im Bezug auf den Kurbelwinkel verändert ist. Hierdurch soll es möglich sein, über einen Phasensteller in Kombination mit einer derartigen gemischten Nockenanordnung die temporäre Darstellung der inneren Abgasrückführung vorzunehmen. Grundsätzlich stößt jedoch die Anordnung von Nockenphasenstellern insbesondere beim Dieselmotor aufgrund des sehr geringen Ventilwinkels und dem dadurch bedingten sehr kleinen Abstand der Nockenwellen auf erhebliche Platzprobleme. Des Weiteren erscheint eine derartige Ausführung sehr aufwendig und damit kostenintensiv.

Der Erfindung liegt daher die Aufgabe zugrunde, einen mechanisch steuerbaren Ventiltrieb sowie eine mechanisch steuerbare Ventiltriebanordnung und eine Brennkraftmaschine derart auszugestalten, dass die oben beschriebenen Nachteile vermieden werden.

Diese Aufgabe wird durch einen erfindungsgemäßen mechanisch steuerbaren Ventiltrieb dadurch gelöst, dass die Umfangskontur der Nockenwelle ein gegenüber einem Grundkreis der Nockenwelle zurückversetztes Teilstück aufweist. Hierdurch wird eine wesentlich größere Flexibilität bei der Ventilhubverstellung des Gasauslassventils erreicht. Es kann so auf besonders einfache und kostengünstige Art und Weise ein Ersthub und ein kleinerer Auslasszweithub im Bereich der Ansaugphase bereitgestellt werden. Durch den früheren Auslassschließzeitpunkt im Ersthub verbleibt etwas mehr Abgas im Zylinder. Eine zusätzliche und größere Abgasrückführmenge wird jedoch durch den Zweithub des Auslassventils ausgelöst. Hierbei wird Abgas aus dem Auslasssystem wieder zurück in den Zylinder gesaugt.

In besonders vorteilhafter Weise besitzt die Arbeitskurve im Wesentlichen eine erste und eine zweite Hubkontur, wobei die erste Hubkontur dem vorgenannten Ersthub zuzuordnen ist und die zweite Hubkontur dem vorgeordneten zweiten Zweithub zuzuordnen ist. Vorteilhafter Weise weist die Ventilhubverstelleinrichtung eine Exzenterwelle auf, die mit einem Angriffsorgan der Zwischenhebelanordnung in Wirkverbindung steht. Hierbei kann das Angriffsorgan der Zwischenhebelanordnung als Rolle ausgeführt sein.

Der Zwischenhebel kann an dem der Arbeitskontur entgegengesetzten Seite eine Rolle aufweisen, die in einer Kulisse geführt ist und in Wirkverbindung mit der Nockenwelle stehen kann, wobei das Angriffsorgan zwischen der Rolle und der Arbeitskontur vorgesehen ist. Hierbei kann die Kulisse vorteilhafter Weise eine von einem Grundkreis abweichende Hubkontur aufweisen, derart, dass diese Hubkontur mit der ersten Hubkontur der Arbeitskurve zusammenwirkt. Auf diese Weise kann die Höhe der Restgasmenge besonders einfach durch Lage, Länge und Höhe dieser Hubkontur kontrolliert werden.

Die Erfindung wird ebenfalls gelöst durch eine mechanisch steuerbare Ventiltriebanordnung, wobei eine Übertragungsanordnung zwei Zwischenhebelanordnungen aufweist, die in Wirkverbindung mit jeweils zwei Schwenkhebelanordnungen stehen, wobei die Zwischenhebel der Zwischenhebelanordnungen über eine Verbindungswelle an dem der Arbeitskurve entgegengesetzten Ende miteinander verbunden sind, wobei erste Rollen für die Kraftübertragung der Nockenwelle auf die Zwischenhebel vorgesehen sind und eine zweite Rolle zwischen den Zwischenhebeln zur Führung in der Kulisse vorgesehen ist.

Des Weiteren wird die Aufgabe durch eine Brennkraftmaschine, insbesondere Dieselmotor, mit einem derartigen Ventiltrieb oder einer derartigen Ventiltriebanordnung gelöst. Hierbei ist es besonders vorteilhaft, wenn das mindestens eine Gaseinlassventil durch einen variablen Ventiltrieb ansteuerbar ist.

Die Erfindung wird nachfolgend anhand der Zeichnung näher erläutert, hierin zeigen:
- Figur 1: ein Diagramm, bei dem auf der Y-Achse der Ventilhub und auf der X-Achse der Kurbelwinkel nach OT-Ladungswechsel dargestellt ist,
- Figur 2: ein erfindungsgemäßer mechanischer Ventiltrieb mit einer Exzenterwelle in Position vorne und einem Grundkreiseingriff einer Nockenwelle,
- Figur 3: der Ventiltrieb aus Figur 2 mit dem Eingriff eines zurückversetzten Teilstückes der Nockenwelle,
- Figur 4: der Ventiltrieb aus Figur 2 mit dem Eingriff eines Nockens der Nockenwelle,
- Figur 5: der Ventiltrieb aus Figur 2 bei maximal zurückgestellter Steuerwelle und dem Eingriff des Grundkreises der Nockenwelle,
- Figur 6: der Ventiltrieb aus Figur 5 mit dem Eingriff des zurückversetzten Teilstückes der Nockenwelle, und
- Figur 7: der Ventiltrieb aus Figur 5 mit dem Eingriff des Nockens der Nockenwelle.

Der nachfolgend mechanische Ventiltrieb ist hinlänglich unter dem Namen "Univalve" bekannt. Zur Funktionsweise eines derartigen Ventiltriebes 2 wird darüber hinaus hinsichtlich der Funktionsweise explizit auf die DE 10 2004 003 327 A1 verwiesen, wobei darauf hinzuweisen ist, dass eine Steuerwelle sowohl ein- als auch mehrteilig ausgeführt sein kann.

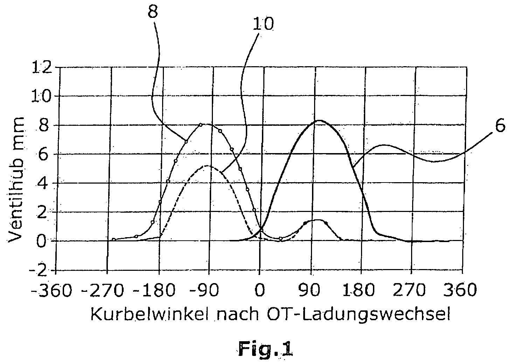

Figur 1 zeigt ein Diagramm, bei dem ein Ventilhub eines Gaseinlass- und eines Gasauslassventils über einem Kurbelwinkel einer Brennkraftmaschine dargestellt ist. Die durchgezogene Linie 6 zeigt den Verlauf des Gaseinlassventils, die punktierte Linie 8 den Verlauf eines herkömmlichen Gasauslassventils und die strichpunktierte Linie 10 den Verlauf des Gasauslassventils 4, das durch den erfindungsgemäßen mechanisch steuerbaren Ventiltrieb 2 angesteuert wird. Gegenüber der konventionellen Ventilerhebungskurven 8 eines Gasauslassventils weist die modifizierte Erhebungskurve 10 des Gasauslassventils 4 im Zusammenspiel mit der Erhebungskurve des Gaseinlassventils 6 den Vorteil auf, dass durch den früheren Auslassschließzeitpunkt im Ersthub etwas mehr Abgas im Zylinder verbleibt und durch den geringeren Zweithub Abgas aus dem Auslasssystem der Brennkraftmaschine wieder zurück in den Zylinder gesaugt wird, wodurch auf einfache Weise eine interne Abgasrückführung realisiert werden kann.

Der erfindungsgemäße mechanisch steuerbare Ventiltrieb 2 weist eine Übertragungsanordnung 12 auf, die im vorliegenden Ausführungsbeispiel eine Zwischenhebelanordnung 14 und eine Schwenkhebelanordnung 16 besitzt. Des Weiteren ist eine Ventilhubverstelleinrichtung 18 in Form einer Exzenterwelle vorgesehen, die durch einen nicht dargestellten Aktuator angetrieben wird und mit einem Angriffsorgan 20, das im vorliegenden Ausführungsbeispiel als Rolle ausgebildet ist, der Zwischenhebelanordnung 14 in Wirkverbindung steht. Auf die Zwischenhebelanordnung greifen nicht weiter dargestellte Federmittel an, die gewährleisten, dass die Zwischenhebelanordnung 14 in jeder Position mit der Ventilhubverstelleinrichtung 18, einer Kulisse 36 und einer Nockenwelle 38 in Wirkverbindung steht.

Ein Zwischenhebel 22 der Zwischenhebelanordnung 14 steht über eine Rolle 24 der Schwenkhebelanordnung 16 in Wirkverbindung mit einem Schwenkhebel 26 der Schwenkhebelanordnung 24, derart, dass verschiedene Ventilhubpositionen des Gasauslassventils 4 ansteuerbar sind. Hierzu weist der Zwischenhebel 22 eine Arbeitskurve 28 mit einer ersten Hubkontur 30 und einer zweiten Hubkontur 32 auf. Des Weiteren weist der Zwischenhebel 22 an der der Arbeitskontur 28 entgegengesetzten Seite eine Rolle 34 auf, die in der Kulisse 36 geführt ist und in Wirkverbindung mit der Nockenwelle 38 steht. Um wie üblich einen Hub des Gasauslassventils 4 auszulösen, besitzt die Nockenwelle 38 einen Nocken 40, dem der Ersthub der Ventilerhebungskurve 8 des Gasauslassventils 4 zuzuordnen ist. Um wie vorgehend beschrieben, eine interne Abgasrückführung auf einfache und kostengünstige Weise zu ermöglichen, weist die Nockenwelle darüber hinaus noch ein gegenüber einem Grundkreis 42 der Nockenwelle 38 zurückversetztes Teilstück 44 auf, um einen Zweithub der Ventilerhebungskurve 8 des Gasauslassventils 4 zu ermöglichen. Um den Ersthub der Ventilerhebungskurve 8 genauer ansteuern zu können, ist im vorliegenden Ausführungsbeispiel vorgesehen, dass die Kulisse 26 eine Hubkontur 46 aufweist, die mit der ersten Hubkontur 30 der Arbeitskurve 28 zusammenwirkt.

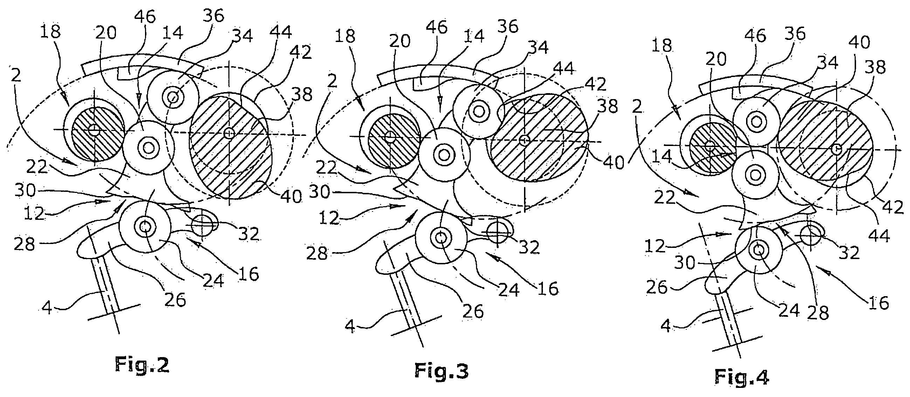

Nachfolgend wird nun die Erfindung anhand schematisch dargestellter Stellungen des mechanischen Ventiltriebes 2 näher erläutert. Die Figuren 2 bis 4 zeigen hierbei mögliche Positionen bei einer maximalen Vorstellung der Exzenterwelle 18. Solange die Nockenwelle 38 mit ihrem Grundkreis 42 in Wirkverbindung mit dem Zwischenhebel 22 steht, wird hierbei kein Hub des Gasauslassventils 4 ausgelöst. Auch die Wirkverbindung des Zwischenhebels 22 mit dem zurückversetzten Teilstück 44 der Nockenwelle führt aufgrund der maximalen Vorstellung der Exzenterwelle 18 zu keinem Ventilhub des Gasauslassventils 4, wie in Figur 3 dargestellt.

Erst der Eingriff des Nockens 40, wie in Figur 4 dargestellt, führt zu einer Verschiebung der Rolle 34 in den Bereich der Hubkontur 46 und somit zu einem Eingriff der Hubkontur 30 der Arbeitskurve 28 mit der Rolle 24 des Schwenkhebels 26 und damit zu einem Hub des Gasauslassventils 4.

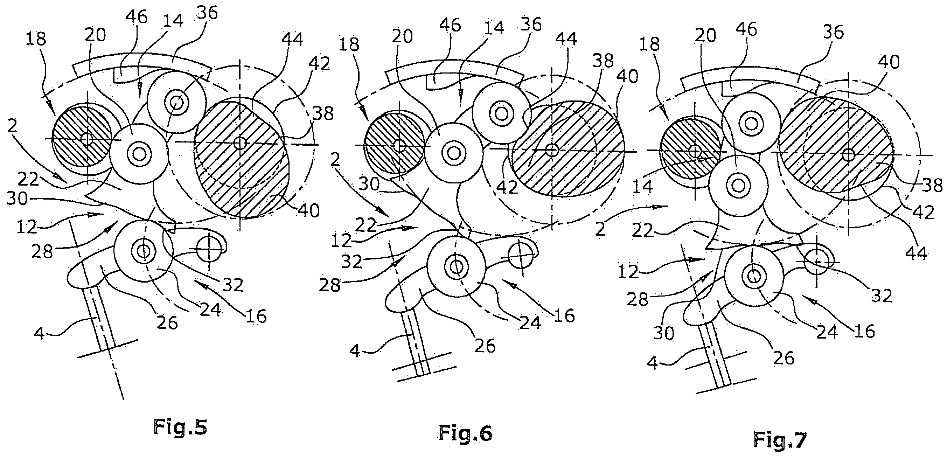

Figur 5 zeigt nun den mechanisch steuerbaren Ventiltrieb 2 bei maximaler zurückgestellter Exzenterwelle 18. Auch hier wird bei Eingriff des Grundkreises 42 der Nockenwelle 38 kein Hub ausgelöst (siehe Figur 5).

Figur 6 zeigt nun aufgrund der veränderten Position der Exzenterwelle 18 einen Eingriff des zurückversetzten Teilstückes 44 der Nockenwelle 38 mit dem Zwischenhebel 22, der zu einem Eingriff der Hubkontur 32 der Arbeitskurve 28 mit der Schwenkhebelanordnung 16 und damit zu dem vorgehend beschriebenen Zweithub der Ventilerhebungskurve 8 führt.

Figur 7 zeigt den Eingriff des Nockens 40 der Nockenwelle 38 und dem damit verbundenen veränderten Eingriff der Hubkontur 30 der Arbeitskurve 28 und dem damit verbundenen verringerten Ventilhub des Gasauslassventils 4. Es sollte deutlich sein, dass sich durch entsprechende Positionierung der Exzenterwelle 18 auch alle Zustände zwischen den in den Figuren 2 bis Figur 7 dargestellten Positionen stufenlos einstellen lassen.

Darüber hinaus ist es natürlich noch möglich, bei mehreren in Reihe geschalteten Zylindern einer Brennkraftmaschine eine Übertragungsanordnung mit zwei Zwischenhebelanordnungen auszuführen, wobei diese zwei Zwischenhebelanordnungen in Wirkverbindung mit jeweils zwei Schwenkhebelanordnungen stehen. Die Zwischenhebel der Zwischenhebelanordnungen sind dabei über eine Verbindungswelle an dem der Arbeitskurve entgegengesetzten Ende miteinander verbunden, wobei auf bekannte Weise erste Rollen für die Kraftübertragung der Nockenwelle auf die Zwischenhebel vorgesehen sind und eine zweite Rolle zwischen den Zwischenhebeln zur Führung in der Kulisse vorgesehen ist. Diese Ausführungsform sorgt für eine besonders kompakte Anordnung, wobei eine Kulisse zwischen zwei Zwischenhebelanordnungen zugewiesen ist. Besonders vorteilhaft kann die Erfindung genutzt werden im Verband mit einem variablen Ventiltrieb für die Gaseinlassventile.

## Patentansprüche

1. Mechanisch steuerbarer Ventiltrieb mit einem Gasauslassventil (4), wobei dem Gasauslassventil (4) eine Übertragungsanordnung (12) zugeordnet ist, wobei die Übertragungsanordnung (12) mindestens eine Zwischenhebelanordnung (14) und mindestens eine Schwenkhebelanordnung (16) aufweist, wobei ein Zwischenhebel (22) der Zwischenhebelanordnung (14) eine Arbeitskurve (28) zur Wirkverbindung mit einem Schwenkhebel (26) der Schwenkhebelanordnung (16) aufweist, wobei der Zwischenhebel (22) in Wirkverbindung mit einer Umfangskontur (40, 42, 44) einer Nockenwelle (38) steht und Wobei die Zwischenhebelanordnung (14) ein Angriffsorgan (20) aufweist, das mit einer Ventilhubverstelleinrichtung (18) in Wirkverbindung steht, derart, dass verschiedene Ventilhubpositionen einstellbar sind, wobei Federmittel vorgesehen sind, die auf die Zwischenhebelanordnung (14) angreifen, **dadurch gekennzeichnet, dass** die Umfangskontur (40, 42, 44) der Nockenwelle (38) ein gegenüber einem Grundkreis (42) der Nockenwelle (38) zurückversetztes Teilstück (44) aufweist.

2. Mechanisch steuerbarer Ventiltrieb nach Anspruch 1, **dadurch gekennzeichnet, dass** die Arbeitskurve (28) im Wesentlichen eine erste und eine zweite Hubkontur (30, 32) besitzt.

3. Mechanisch steuerbarer Ventiltrieb nach Anspruch 1 oder 2, **dadurch gekennzeichnet, dass** die Ventilhubverstelleinrichtung (18) eine Exzenterwelle aufweist, die mit einem Angriffsorgan (20) der Zwischenhebelanordnung (14) in Wirkverbindung steht.

4. Mechanisch steuerbarer Ventiltrieb nach einem der vorhergehenden Ansprüche, **dadurch gekennzeichnet, dass** der Zwischenhebel (22) an der der Arbeitskontur (28) entgegengesetzten Seite eine Rolle (34) aufweist, die in einer Kulisse (36) geführt ist und in Wirkverbindung mit der Nockenwelle (38) stehen kann, wobei das Angriffsorgan (20) zwischen der Rolle (34) und der Arbeitskontur (28) vorgesehen ist.

5. Mechanisch steuerbarer Ventiltrieb nach Anspruch 4, **dadurch gekennzeichnet, dass** die Kulisse (36) eine von einem Grundkreis abweichende Hubkontur (46) aufweist, derart, dass diese Hubkontur (46) mit der ersten Hubkontur (30) der Arbeitskontur (28) zusammenwirkt.

6. Mechanisch steuerbare Ventiltriebanordnung mit mehreren Ventiltrieben nach Anspruch 5, **dadurch gekennzeichnet, dass** eine Übertragungsanordnung zwei Zwischenhebelanordnungen aufweist, die in Wirkverbindung mit jeweils zwei Schwenkhebelanordnungen stehen, wobei die Zwischenhebel der Zwischenhebelanordnungen über eine Verbindungswelle an dem der Arbeitskurve entgegengesetzten Ende miteinander verbunden sind, wobei erste Rollen für die Kraftübertragung der Nockenwelle auf die Zwischenhebel vorgesehen sind und eine zweite Rolle zwischen den Zwischenhebeln zur Führung in der Kulisse vorgesehen ist.

7. Brennkraftmaschine, insbesondere Dieselmotor, mit mindestens einem Arbeitszylinder, der mindestens ein Einlass- und ein Auslassventil (4) aufweist, wobei das mindestens eine Auslassventil (4) durch einen Ventiltrieb (2) nach einem der Ansprüche 1 - 5 oder durch eine Ventiltriebanordnung nach Anspruch 6 ansteuerbar ist.

8. Brennkraftmaschine nach Anspruch 7, **dadurch gekennzeichnet, dass** das mindestens eine Gaseinlassventil durch einen variablen Ventiltrieb ansteuerbar ist.

## Claims

1. A mechanically controllable valve train comprising a gas outlet valve (4) which gas outlet valve (4) is associated with a transmission arrangement (12), wherein the transmission arrangement (12) comprises at least one intermediate lever arrangement (14) and at least one swivel lever arrangement (16), wherein an intermediate lever (22) of the intermediate lever arrangement (14) comprises a working curve (28) for cooperating with a swivel lever (26) of the swivel lever arrangement (16), wherein the intermediate lever (22) is operatively connected to a peripheral contour (40, 42, 44) of a camshaft and wherein the intermediate lever arrangement (14) comprises an engagement element (20) which is operatively connected to a valve stroke adjusting device (18) such that different valve stroke positions can be adjusted, wherein spring means which engage with the intermediate lever arrangement are provided, **characterized in that** the peripheral contour (40, 42, 44) of the camshaft (38) comprises a section (44) which is offset with respect to a base circle (42) of the camshaft (28).

2. The mechanically controllable valve train of claim 1, **characterized in that** the working curve (28) substantially has a first and a second stroke contour (30, 32).

3. The mechanically controllable valve train of claim 1 or 2, **characterized in that** the valve stroke adjusting device (18) has an eccentric shaft operatively connected to an engagement element (20) of the intermediate lever arrangement (14).

4. The mechanically controllable valve train of one of the preceding claims, **characterized in that** the intermediate lever (22) has a roller (34) on the side opposite the working contour (28), which roller is guided in a slotted link (36) and may be operatively connected to the camshaft (38), wherein the engagement element (20) is provided between the roller (34) and the working contour (28).

5. The mechanically controllable valve train of claim 4, **characterized in that** the slotted link (36) has a stroke contour (46) differing from a base circle such that this stroke contour (46) cooperates with the first stroke contour (30) of the working contour (28).

6. The mechanically controllable valve train arrangement with a plurality of valve trains of claim 5, **characterized in that** a transmission arrangement comprises two intermediate lever arrangements, each operatively connected to two swivel lever arrangements, wherein the intermediate levers of the intermediate lever arrangements are connected to each other via a connecting shaft at the end opposite the working curve, wherein first rollers are provided for power transmission from the camshaft to the intermediate levers, and a second roller is provided between the intermediate levers for guiding in the slotted link.

7. An internal combustion engine, in particular a Diesel engine, with at least one working cylinder having at least one inlet and one outlet valve (4), wherein the at least one outlet valve (4) is adapted to be controlled by a valve train (2) of one of claims 1-5 or a valve train arrangement of claim 6.

8. The internal combustion engine of claim 7, **characterized in that** the at least one gas inlet valve is adapted to be controlled by a variable valve train.

## Revendications

1. Dispositif de commande mécanique de soupape avec une soupape d'échappement de gaz (4), un ensemble de transmission (12) étant associé à ladite soupape d'échappement de gaz (4), ledit ensemble de transmission (12) comprenant au moins un ensemble de leviers intermédiaires (14) et au moins un ensemble de leviers basculants (16), où un levier intermédiaire (22) dudit ensemble de leviers intermédiaires (14) a un came de travail (28) pour une liaison active avec un levier basculant (26) dudit ensemble de leviers basculants (16), ledit levier intermédiaire (22) étant en liaison active avec un contour circonférentiel (40, 42, 44) d'un arbre à cames (38), et ledit ensemble de leviers intermédiaires (14) comprenant un élément d'engagement (20) en liaison active avec un moyen de réglage de la levée de soupape (18) de sorte qu'il est possible de régler différentes positions de levée de soupape, où des moyens de ressort sont prévus, qui engagent ledit ensemble de leviers intermédiaires (14), **caractérisé en ce que** le contour circonférentiel (40, 42, 44) de l'arbre à cames (38) comprend une partie (44) en retrait par rapport à un cercle de base (42) de l'arbre à cames (38).

2. Dispositif de commande mécanique de soupape selon la revendication 1, **caractérisé en ce que** la came de travail (28) sensiblement comprend un première et un deuxième contour de levée (30, 32).

3. Dispositif de commande mécanique de soupape selon la revendication 1 ou 2, **caractérisé en ce que** le moyen de réglage de la levée de soupape (18) comprend un arbre excentrique en liaison active avec un élément d'engagement (20) dudit ensemble de leviers intermédiaires (14).

4. Dispositif de commande mécanique de soupape, selon l'une quelconque des revendications précédentes, **caractérisé en ce que** le levier intermédiaire (22) comprend une roulette (34) sur la côté opposée au contour de travail (28), la roulette étant guidée dans une coulisse (36) et pouvant être en liaison active avec l'arbre à cames (38), ledit élément d'engagement (20) étant disposé entre la roulette (34) et le contour de travail (28).

5. Dispositif de commande mécanique de soupape selon la revendication 4, **caractérisé en ce que** la coulisse (36) a un contour de levée (46) différent d'un cercle de base, de sorte que ce contour de levée (46) coopère avec ledit premier contour de levée (30) du contour de travail (28).

6. Ensemble de commande mécanique de soupape avec plusieurs dispositifs de commande de soupape selon la revendication 5, **caractérisé en ce qu'**un ensemble de transmission a deux ensembles de leviers intermédiaires respectivement en liaison active avec deux ensembles de leviers basculants, les leviers intermédiaires des ensembles de leviers intermédiaires sont reliés l'un a l'autre á l'extrémité opposée au came de travail par un arbre de liaison, où des premières roulettes sont prévues pour la transmission de force de l'arbre à cames aux leviers intermédiaires, et une deuxième roulette est prévue entre les leviers intermédiaires pour guidage dans la coulisse.

7. Moteur à combustion interne, en particulier un moteur Diesel, avec au moins un cylindre de travail ayant au moins une soupape d'admission et une soupape de sortie (4), ladite au moins une soupape de sortie (4) pouvant être commandée par un dispositif de commande de soupape (2) selon l'une quelconque des revendications 1 -5 ou par un ensemble de commande mécanique de soupape selon la revendication 6.

8. Moteur à combustion interne selon la revendication 7, **caractérisé en ce que** ladite au moins une soupape d'admission peut être commandée par un dispositif de commande de soupape variable.
